# EUROPEAN PATENT SPECIFICATION

(11) **EP 2 959 980 B1**
(45) Date of publication and mention of the grant of the patent: **08.03.2017**
(21) Application number: 15020104.4
(22) Date of filing: 25.06.2015
(51) Int. Cl.: B05D 3/06, F21V 8/00, B41J 11/00

(54) **MODULAR UVLED LAMP REFLECTOR ASSEMBLY**
MODULARE UVLED-LAMPENREFLEKTORANORDNUNG
ENSEMBLE RÉFLECTEUR DE LAMPE DEL UV MODULAIRE

(30) Priority: 26.06.2014 US 201462017466 P; 15.01.2015 US 201562103952 P; 23.06.2015 US 201514747477
(43) Date of publication of application: 30.12.2015
(73) Proprietor: Heraeus Noblelight America LLC, Gaithersburg, MD 20878 (US)
(72) Inventor: Sprankle, David Allen, Hagerstown, MD 21742 (US); Manikkam, Ruben Charles, Clarksburg, MD 20871 (US); Jarrard, George Frederick, Westminster, MD 21158 (US)
(74) Representative: Beresford, Keith Denis Lewis

(56) References cited:
- US-A1- 2007 017 503
- US-A1- 2013 187 063
- US-B1- 6 621 973

## Description

### CROSS-REFERENCE TO RELATED APPLICATIONS

This application claims the benefit of U.S. provisional patent application No. 62/017,466 filed June 26, 2014 and U.S. provisional patent application No. 62/103,952 filed January 15, 2015.

### TECHNICAL FIELD

The disclosure relates to a reflector assembly used for lamps having an elongated optical source and having a Lambertian (cosine) distribution of output light produceable by the elongated optical source.

### BACKGROUND

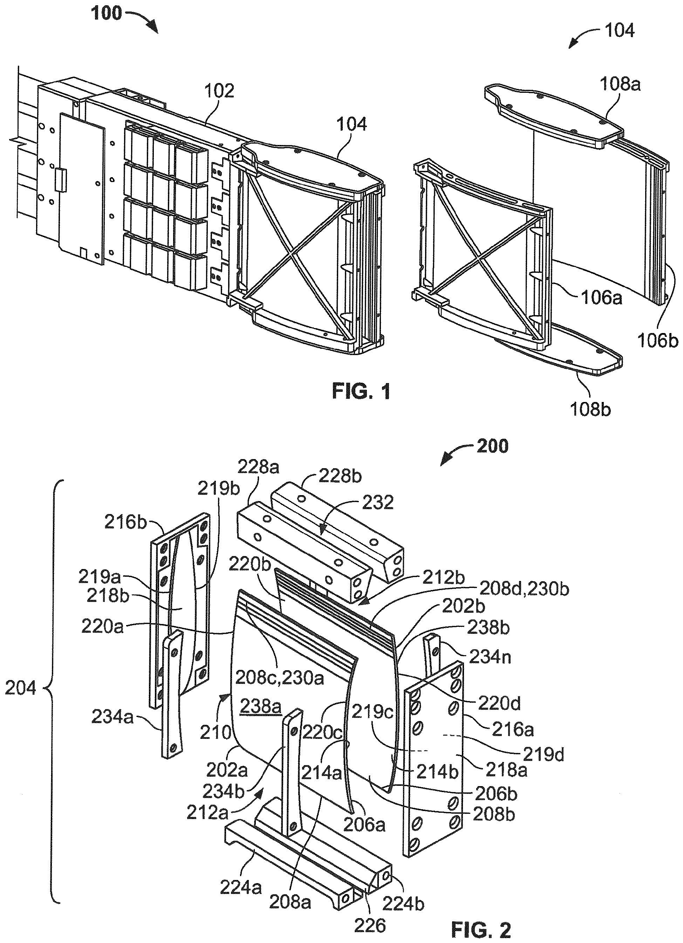

FIG. 1 shows a perspective view of an ultraviolet light emitting diode (UVLED)-based lamp assembly 100 as described in U. S. Patent No. 8,378,322 (hereinafter the '322 patent) and U. S. Patent No. 8,809,820 (hereinafter the '820 patent). The lamp assembly 100 of the '322 patent and the '820 patent may each comprise a lamp head assembly 102 and a reflector assembly 104. Figure 1 further shows an exploded perspective view of the reflector assembly 104. The reflector assembly 104 may comprise a pair of solid machined side reflectors 106a, 106b and a pair of end reflectors 108a, 108b. Each of the reflectors 106a, 106b may require polishing and/or plating to provide a reflective surface. The material used for each of the reflectors 106a, 106b may be a metal alloy, which may be machinable, but may not provide an ideal surface reflectivity as other less machinable metal alloys. The manufacturing process used to prepare the reflectors 106a, 106b may be expensive due to the time required for machining and polishing the reflectors 106a, 106b.

Additionally, it is believed that the reflector assembly 104 of the '322 patent and the '820 patent does not sufficiently support mounting on the lamp head assembly 102. Experiments have shown that the best way to focus the lamp assembly 100 of the '322 patent and the '820 patent for illuminating a work piece is to position the reflector assembly 104 at its ideal location for illumination of the work piece and then mounting the lamp head assembly 102. When mounting the lamp head assembly 102, the reflector assembly 104should be positioned accurately. Since UV energy is coming from the reflector assembly 104, the aforementioned technique of manually positioning the reflector assembly 104 at its ideal location for illumination of the work piece and then mounting the lamp head assembly is often fraught with error and is labour intensive.

Accordingly, it is believed that the existing design employed in the '322 patent and the '820 patent to machine a reflective surface into a block of material, then having that block polished, may add a significant cost to the lamp assembly 100. Additionally, the existing machined reflector design of the '322 patent and the '820 patent may offer no features to permit the lamp assembly 100 (and reflector assembly 104) to be mounted into a fixture.
US2007/0017503 provides an irradiating apparatus includes a support member and a reflector supported by the support member to define a concave light energy reflector surface. A light source of radiating energy is disposed generally at the source focal point of the reflector. The support member has a passage for cooling air to flow therethrough and openings for distributing the cooling air to the apparatus.

Other known existing reflector assemblies may not make provisions for using the reflector assemblies to mount a lamp to other equipment or to provide for an exchangeable reflector using the same optical source (lamp assembly).

### SUMMARY

The above-described problems are remedied and a technical solution is achieved in the art by providing a modular reflector assembly. The modular reflector assembly comprising: a frame assembly comprising a first backing frame having a first curvature and a second backing frame having a second curvature opposing the first curvature; a first reflector sheet of a material removably securable to the first backing frame, the first backing frame flexing the first reflector sheet (202a) to have the first curvature; and a second reflector sheet of the material removably securable to the second backing frame, the second backing frame flexing the second reflector sheet to have the second curvature, characterised in that the frame assembly further comprises a first base bar and a second base bar receiving and supporting a bottom portion of the first reflector sheet and a bottom portion of the second reflector sheet, respectively.

### BRIEF DESCRIPTION OF THE DRAWINGS

The invention may be more readily understood from the detailed description of an exemplary embodiment presented below considered in conjunction with the following drawings:
FIG. 1 shows a perspective view of an ultraviolet light emitting diode (UV LED)-based lamp assembly as described in U. S. Patent No. 8,378,322 (hereinafter the '322 patent) and U. S. Patent No. 8,809,820 (hereinafter the '820 patent).
FIG. 2 is an exploded perspective view of a modular reflector assembly according to an example of the disclosure.
FIG. 3 is a perspective view of one example of the reflector assembly of FIG.2 mounted to a lamp head assembly.
FIG. 4 is an exploded perspective view of a modular reflector assembly according to another example of the disclosure.
FIG. 5A is a side view of the machined reflector assembly mounted to the lamp head assembly to produce the lamp assembly of FIG. 1.
FIG. 5B is a side view of the modular reflector assembly of FIG. 4 mounted to a lamp head assembly to produce a lamp assembly according to an example of the disclosure. FIG. 5B shows an improved mounting of the reflector assembly over that used in FIG. 5A.
FIG. 6 is an exploded view of the modular reflector assembly of FIG. 4 oriented to be assembled with a lamp head assembly to produce a lamp assembly according to an example of the disclosure.
FIG. 7 is a perspective view of the lamp assembly of FIG. 5B and FIG. 6 showing structure for mounting the reflector assembly to a lamp head assembly to produce the lamp assembly according to an example of the disclosure.
FIG. 8 is an exploded perspective view of a double length modular reflector assembly according to still another example of the disclosure.
FIG. 9 is a perspective view of the lamp assemblies of FIG. 5B, FIG. 6, and FIG. 7 assembled with a hollow cylindrical work piece curing fixture according to an embodiment of the disclosure.

### DETAILED DESCRIPTION

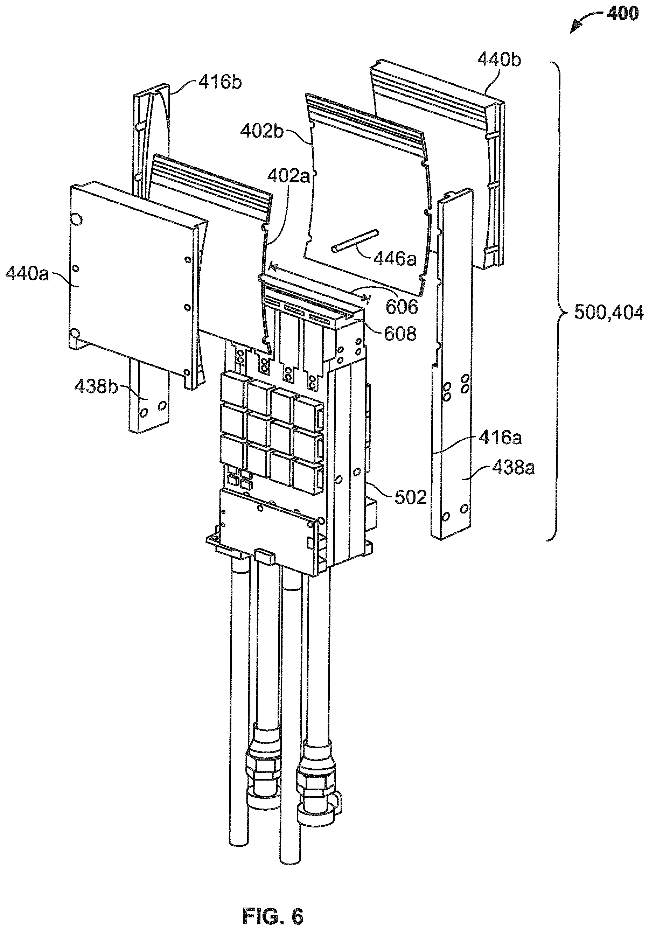

FIG. 2 is an exploded perspective view of a modular reflector assembly 200 according to an example of the disclosure. In an example, the reflector assembly 200 may be employed with elongated lamps having an optical source with a Lambertian (cosine) distribution of output light. The reflector assembly 200 may comprise a first reflector sheet 202a of a material and a second reflector sheet 202b of the material. The first reflector sheet 202a of the material and the second reflector sheet 202b may be positioned and secured and supported by a frame assembly 204 that is mountable to an elongated light source 608 (see FIG. 6) so as to substantially overly the entirety of the elongated light source 608. The elongated light source 608 may be an array of light emitting diodes.

The frame assembly 204 may be sized and shaped to removably secure the first reflector sheet 202a and the second reflector sheet 202b rigidly in the frame assembly 204. The frame assembly 204 may define the shape of the first reflector sheet 202a and the second reflector sheet 202b. The frame assembly 204 may align a bottom portion 206a of the first reflector sheet 202a and a bottom portion 206b of the second reflector sheet 202b substantially parallel to a longitudinal axis 606 (see FIG.6) defined by the elongated light source 608.

In an example, the shape of the first reflector sheet 202a and the shape of the second reflector sheet 202b may be defined by the frame assembly 204 to have opposing concave curvatures and end portions 208a, 208b, 208c, 208d aligned with each other. In an example, the combined shape of the first reflector sheet 202a and the second reflector sheet 202b may be defined by the frame assembly 204 to be wider near a centre portion 210 of the combined shape of the first reflector sheet 202a and the second reflector sheet 202b relative to end portions 212a, 212b of the combined shape of the first reflector sheet 202a and the second reflector sheet 202b.

In an example, the first reflector sheet 202a and the second reflector sheet 202b may be defined by the frame assembly 204 to each have a shape of a portion of one of an ellipse having a focal point on the opposite side of the centre line of the projected optical pattern on a work piece, a compound set of ellipses, or a compound set of parabolic shapes. In an example, the first reflector sheet 202a and the second reflector202b may be variable in shape as defined by the shape of parts of the frame assembly 204 used to secure the first reflector sheet 202a and the second reflector sheet 202b.

In an example, the first reflector sheet 202a and the second reflector sheet 202b may each comprise a sheet of metal. In one example, the metal may be an alloy of aluminium.

In an example, the first reflector sheet 202a and the second reflector sheet 202b may each further comprise a backed liner of reflective material (not shown) adhered to a sheet of metal. In another example, the first reflector sheet 202a and the second reflector sheet 202b may each further comprise a reflective coating (not shown) formed on an inner surface 214a of the first reflector sheet 202a and on an inner surface 214b of the second reflector sheet 202b as defined by the frame assembly 204.

The frame assembly 204 may further comprise a first end reflector 216a and a second end reflector 216b. The first end reflector 216a and the second end reflector 216b may each have a central portion 218a, 218b, respectively, extending therefrom to removably receive side portions 220a, 220b, 220c, 220d of each of the first reflector sheet 202a and the second reflector sheet 202b, respectively, and to further define the shape of the first reflector sheet 202a and the second reflector sheet 202b. The central portion 218a of the first end reflector 216b may have a first side portion 219a having a first curvature and a second side portion 219b having a second curvature. The central portion 218b of the second end reflector 216a may have a first side portion 219c having a first curvature and a second side portion 219d having a second curvature.

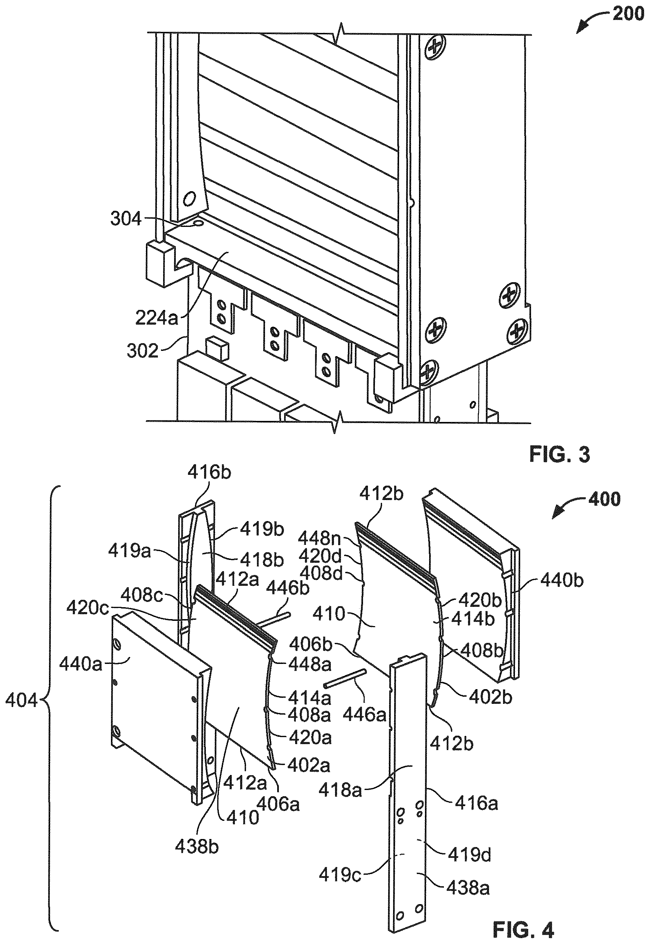

The first end reflector 216a and the second end reflector 216b may overly a lamp head assembly 302 as shown in FIG. 3.

The frame assembly 204 may further comprise a first reflector base bar 224a and a second reflector base bar 224b. The first reflector base bar 224a and the second reflector base bar 224b may be sized and shaped to receive and support the bottom portion 206a of the first reflector sheet 202a and the bottom portion 206b of the second reflector sheet 202b, respectively. The first reflector base bar 224a and the second reflector base bar 224b may be sized and shaped to align the first reflector sheet 202a and the second reflector sheet 202b with the axis 606 of the elongated light source 608 of FIG. 6, respectively. The first reflector base bar 224a and the second reflector base bar 224b may secure the frame assembly 204 to a lamp base associated with the elongated light source 608, and may define a lower aperture for light to enter the frame assembly from the elongated light source 608. The first reflector base bar 224a and a second reflector base bar 224b may further affix the frame assembly 204 to a lamp head assembly 602 associated with the elongated light source 606 as shown in FIG. 3.

FIG. 3 is a perspective view of one example of the reflector assembly 200 of FIG. 2 mounted to a lamp head assembly 302. Each of the first reflector base bar 224a and the second reflector base bar 224b have two screw holes therein (one shown, e.g., 304) for receiving screws (not shown) that may secure and affix the reflector assembly 200 to the lamp head assembly 302. The first reflector base bar 224a and the second reflector base bar 224b may be sized, shaped, and oriented to define a lower aperture 226 for light to enter the reflector assembly 200 from the elongated light source 608 of the lamp head assembly 302.

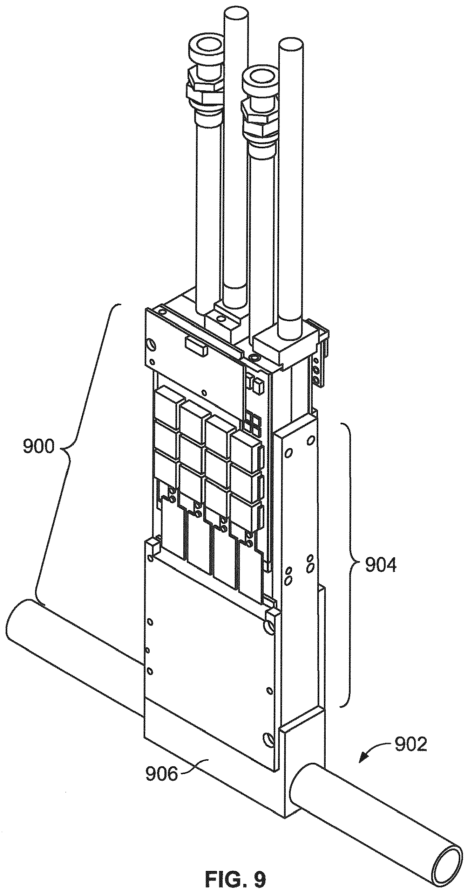

Returning to FIG. 2, the frame assembly 204 may further comprise a first top bar 228a and a second top bar 228b sized and shaped to receive and support a top portion 230a of the first reflector sheet 202a and a top portion 230b of the second reflector sheet 202b, respectively. The first top bar 228a and a second top bar 228b to serve to define a mounting surface of the reflector assembly 200 to a work piece assembly 902 as shown in FIG.9, and to define an upper aperture 232 for light to emanate from the modular reflector assembly 200. The frame assembly 204 may further comprises a transparent anti-reflective coated window (not shown) mounted overlying the upper aperture 232 formed by the first top bar 228a and the second top bar 228b.

The frame assembly 204 may further comprise a first backing frame 234a-234n having the first curvature and comprising a first plurality of backing ribs 234a-234n and a second backing frame 236a-236n having the second curvature comprising a second plurality of backing ribs 236a-236n removably securable to a back portion 238a of the first reflector sheet 202a and a back portion 238b of the second reflector sheet 202b, respectively. The first plurality of backing ribs 234a-234n and the second plurality of backing ribs 236a-236n may further define the shape of the first reflector sheet 202a and the second reflector sheet 202b, respectively. The first backing frame 234a-234n having the first curvature and comprising the first plurality of backing ribs 234a-234n may be configured to flex the first reflector sheet 202a to have the first curvature. The second backing frame 236a-236n having the second curvature and comprising the second plurality of backing ribs 236a-236n may be configured to flex the second reflector sheet 202b to have the second curvature. The first backing frame 234a-234n may further flex the first reflector sheet 202a against the first side portion 219a of the central portion 218a of the first end reflector 216a and the second side portion 219b of the central portion 218a of the first end reflector 216a to have the first curvature. The second backing frame 236a-236n may further flex the second reflector sheet 202b against the first side portion 219c of the central portion 218b of the second end reflector 216b and the second side portion 219d of the central portion 218b of the second end reflector 216b to have the second curvature.

FIG. 4 is an exploded perspective view of a modular reflector assembly 400 according to another example of the disclosure. In an example, the reflector assembly 400 may be employed with elongated lamps having an elongated optical source with a Lambertian (cosine) distribution of output light. The reflector assembly 400 may comprise a first reflector sheet 402a of a material and a second reflector sheet 402b of the material. The first reflector sheet 402a of a material and a second reflector sheet 402b may be positioned and secured and supported by a frame assembly 404 that is mountable to the elongated light source 608 so as to substantially overly the entirety of the elongated light source 608. The elongated light source 608 may be an array of light emitting diodes.

The frame assembly 404 may be sized and shaped to removably secure the first reflector sheet 402a and the second reflector sheet 402b rigidly in the frame assembly 404. The frame assembly 404 may define the shape of the first reflector sheet 402a and the second reflector sheet 402b. The frame assembly 404 may align a bottom portion 406a of the first reflector sheet 402a and a bottom portion 406b of the second reflector sheet 402b substantially parallel to the longitudinal axis 606 of the elongated light source 608.

In an example, the shape of the first reflector sheet 402a and the shape of the second reflector sheet 402b may be defined by the frame assembly 404 to have opposing concave curvatures and end portions 408a, 408b, 408c, 408d aligned with each other. In an example, the combined shape of the first reflector sheet 402a and the second reflector sheet 402b may be defined by the frame assembly 404 to be wider near a centre portion 410 of the combined shape of the first reflector sheet 402a and the second reflector sheet 402b relative to end portions 412a, 412b of the combined shape of the first reflector sheet 402a and the second reflector sheet 402b.

In an example, the first reflector sheet 402a and the second reflector sheet 402b may be defined by the frame assembly 404 to each have a shape of a portion of one of an ellipse having a focal point on the opposite side of the centre line of the projected optical pattern on a work piece, a compound set of ellipses, or a compound set of parabolic shapes. In an example, the first reflector sheet 402a and the second reflector 402b may be variable in shape as defined by the shape of parts of the frame assembly 404 used to secure the first reflector sheet 402a and the second reflector sheet 402b.

In an example, the first reflector sheet 402a and the second reflector sheet 402b may each comprise a sheet of metal. In one example, the metal may be an alloy of aluminium.

In an example, the first reflector sheet 402a and the second reflector sheet 402b may each further comprise a backed liner of reflective material (not shown) adhered to a sheet of metal. In another example, the first reflector sheet 402a and the second reflector sheet 402b may each further comprise a reflective coating (not shown) formed on an inner surface 414a of the first reflector sheet 402a and on an inner surface 414b of the second reflector sheet 402b as defined by the frame assembly 404.

The frame assembly 404 may further comprises a first end reflector 416a and a second end reflector 416b. The first end reflector 416a and a second end reflector 416b may each have a central portion 418a, 418b, respectively, extending therefrom and may be sized and shaped to removably receive side portions 420a, 420b, 420c, 420d of each of the first reflector sheet 402a and the second reflector sheet 402b, respectively, and to further define the shape of the first reflector sheet 402a and the second reflector sheet 402b. The central portion 418a of the first end reflector 416a may have a first side portion 419a having a first curvature and a second side portion 419b having a second curvature. The central portion 418b of the second end reflector 416a may have a first side portion 419c having a first curvature and a second side portion 419d having a second curvature. The first end reflector 416a and the second end reflector 416b may be elongated and may have portions 438a, 438b that extend beyond the bottom portion 206a of the first reflector sheet 202a and the bottom portion 206b of the second reflect sheet 206b.

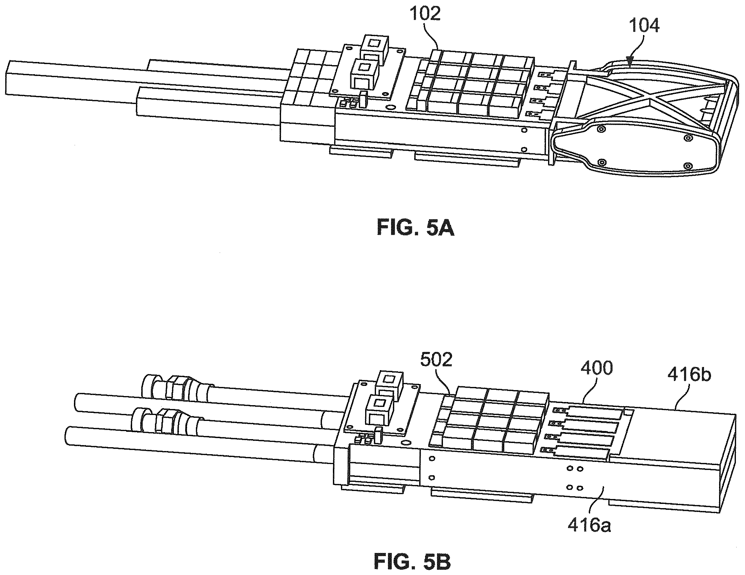

FIG. 5A is a side view of the machined reflector assembly 104 mounted to the lamp head assembly 102 to produce the lamp assembly 100 of FIG. 1. FIG. 5B is a side view of the modular reflector assembly 400 of FIG. 4 mounted to the lamp head assembly 502 to produce a lamp assembly 500 according to an example of the disclosure. FIG. 6 is an exploded view of the modular reflector assembly 400 of FIG. 4 oriented to be assembled with the lamp head assembly 502 to produce a lamp assembly 500 according to an example of the disclosure.

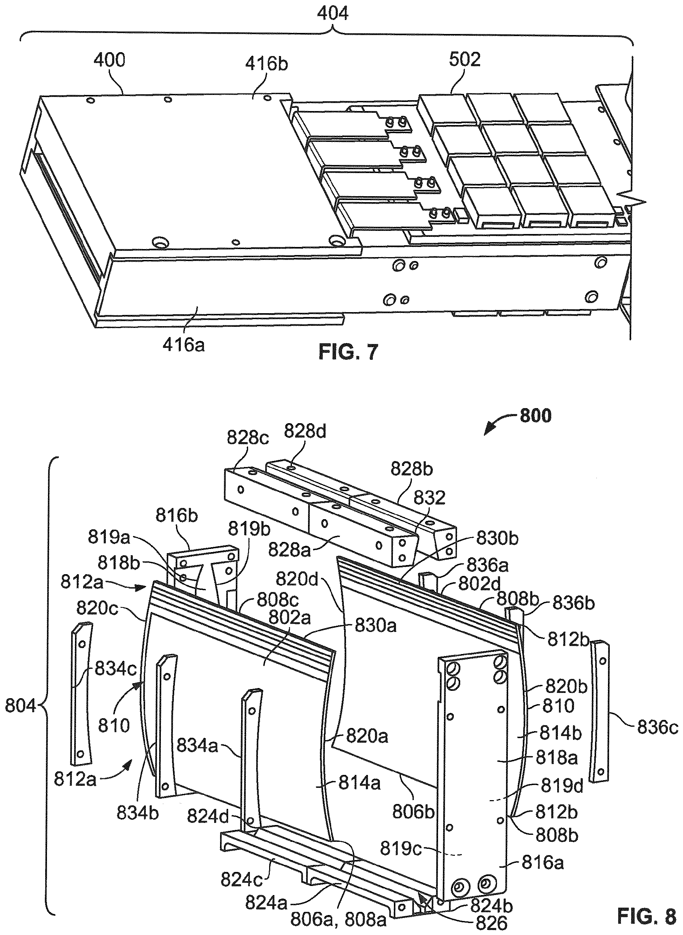

The first end reflector 416a and a second end reflector 416b may be mounted to sides 502 of the lamp head assembly504 of the lamp assembly 500 as shown in FIG.5B and FIG. 6.The first end reflector 416a and a second end reflector 416b may be affix the frame assembly 404 to the lamp head assembly 502 associated with the elongated light source 608 as shown in FIG.7.

FIG.7 is a perspective view of the lamp assembly 500 of FIG. 5B and FIG. 6 showing structure for mounting the reflector assembly 400 to the lamp head assembly 502 to produce the lamp assembly 500 according to an example of the disclosure. Each of the first end reflector 416a and a second end reflector 416b have a plurality of holes therein (two shown, e.g., 504a, 504b) for receiving pins (not shown) that may secure, affix, and align the reflector assembly 400 to the lamp head assembly 502.

Returning to FIG. 4, the frame assembly 404 may further comprise a first backing frame 440a having the first curvature and comprising a first (e.g., machined) backing plate 440a and a second backing frame 440b having the second curvature comprising a second (e.g., machined) backing plate 440b removably securable to a back portion 438a of the first reflector sheet 402a and a back portion 438b of the second reflector sheet 402b, respectively. The first backing plate 440a and the second backing plate 440b may further define the shape of the first reflector sheet 402a and the second reflector sheet 402b.The first backing plate 440a and the second backing plate 440b may have respective bottom portions 442a, 442b that are be sized, shaped, and oriented to define a lower aperture 444 for light to enter the reflector assembly 400 from the elongated light source 608 of the lamp head assembly 602.

The first backing frame 440a having the first curvature and comprising the first backing plate 440a may be configured to flex the first reflector sheet 402a to have the first curvature. The second backing frame 440b having the second curvature and comprising the first backing plate 440b may be configured to flex the second reflector sheet 402b to have the second curvature. The first backing frame 440a may further flex the first reflector sheet 402a against the first side portion 419a of the central portion 418a of the first end reflector 416a and the second side portion 419b of the central portion 418a of the first end reflector 416a to have the first curvature. The second backing frame 440b may further flex the second reflector sheet 402b against the first side portion 419c of the central portion 418b of the second end reflector 416b and the second side portion 419d of the central portion 418b of the second end reflector 416b to have the second curvature.

The frame assembly 404 may further comprise a plurality of alignment pins 446a-446n insertable along one or more edge portions 448a, 448b of the first reflector sheet 402a and one or more edge portions 448c, 448d of the second reflector sheet 402a. The plurality of alignment pins 446a-446n may further be insertable into the first backing plate 440a and the second backing plate 440b. The plurality of alignment pins 446a-446n may align the first reflector sheet 402a and the second reflect sheet 402b with each other and with each of the first backing plate 440a and the second backing plate 440b.

FIG.8 is an exploded perspective view of a double length modular reflector assembly 800 according to still another example of the disclosure. In an example, the first reflector sheet 202a and the second reflector sheet 202b of FIG. 2 may be provided in varying lengths corresponding to light sources of varying lengths. The example shown in FIG.8 shows a first reflector sheet 802a and a second reflector sheet 802b having double the length of the first reflector sheet 202a and the second reflector sheet 202b of FIG. 2. This is made possible by the incorporation into the reflector assembly 800 of a third reflector base bar 824c and a fourth reflector base bar 824d, a third top bar 828c and a fourth top bar 828d, and a first plurality of backing ribs 834a-834z that has a larger number of ribs than the first plurality of backing ribs 234a-234z of FIG. 2 and a second plurality of backing ribs 836a-836n that has a larger number of ribs than the second plurality of backing ribs 236a-236n.

In an example, the reflector assembly 800 may be employed with elongated lamps having an optical source with a Lambertian (cosine) distribution of output light. The reflector assembly 800 may comprise the first reflector sheet 802a of a material and the second reflector sheet 802b of the material. The first reflector sheet 802a of a material and the second reflector sheet 802b are positioned and secured and supported by a frame assembly 804 that is mountable to the elongated light source 608 so as to substantially overly the entirety of the elongated light source 608. The elongated light source 608 may be an array of light emitting diodes.

The frame assembly 804 may removably secure the first reflector sheet 802a and the second reflector sheet 802b rigidly in the frame assembly 804. The frame assembly 804 may further define the shape of the first reflector sheet 802a and the second reflector sheet 802b. The frame assembly 804 may align a bottom portion 806a of the first reflector sheet 802a and a bottom portion 806b of the second reflector sheet 802b substantially parallel to the axis 606 of the elongated light source 608.

In an example, the shape of the first reflector sheet 802a and the shape of the second reflector sheet 802b may be defined by the frame assembly 804 to have opposing concave curvatures and end portions 808a, 808b, 808c, 808d aligned with each other. In an example, the combined shape of the first reflector sheet 802a and the second reflector sheet 802b may be defined by the frame assembly 804 to be wider near a centre portion 810 of the combined shape of the first reflector sheet 802a and the second reflector sheet 802b relative to end portions 812a, 812b of the combined shape of the first reflector sheet 802a and the second reflector sheet 802b.

In an example, the first reflector sheet 802a and the second reflector sheet 802b may be defined by the frame assembly 804 to each have a shape of a portion of one of an ellipse having a focal point on the opposite side of the centre line of the projected optical pattern on a work piece, a compound set of ellipses, or a compound set of parabolic shapes. In an example, the first reflector sheet 802a and the second reflector 802b may be variable in shape as defined by the shape of parts of the frame assembly 804 used to secure the first reflector sheet 802a and the second reflector sheet 802b.

In an example, the first reflector sheet 802a and the second reflector sheet 802b may each comprise a sheet of metal. In one example, the metal may be an alloy of aluminium.

In an example, the first reflector sheet 802a and the second reflector sheet 802b may each further comprise a backed liner of reflective material (not shown) adhered to a sheet of metal. In another example, the first reflector sheet 802a and the second reflector sheet 802b may each further comprise a reflective coating (not shown) formed on an inner surface 814a of the first reflector sheet 802a and on an inner surface 814b of the second reflector sheet 802b as defined by the frame assembly 804.

The frame assembly 804 may further comprises a first end reflector 816a and a second end reflector 816b. The first end reflector 816a and the second end reflector 816b may each have a central portion 818a, 818b, respectively, extending therefrom and may be configured to removably receive side portions 820a, 820b, 820c, 820d of each of the first reflector sheet 802a and the second reflector sheet 802b, respectively, to further define the shape of the first reflector sheet 802a and the second reflector sheet 802b. The central portion 818a of the first end reflector 816a may have a first side portion 819a having a first curvature and a second side portion 819b having a second curvature. The central portion 818b of the second end reflector 816a may have a first side portion 819c having a first curvature and a second side portion 819d having a second curvature. The first end reflector 816a and the second end reflector 816b may be configured to overly the lamp head assembly 602 as shown in FIG.6.

The frame assembly 804 may further comprise a first reflector base bar 824a, a second reflector base bar 824b, a third reflector base bar 824c aligned with the first reflector base bar 824a, and a fourth reflector base bar 824d aligned with the second reflector base bar 824d. The first reflector base bar 824a and the third reflector base bar 824c may to receive and support the bottom portion 806a of the first reflector sheet 802a. The second reflector base bar 824b and the fourth reflector base bar 824dmay receive and support the bottom portion 806b of the second reflector sheet 802b. The reflector base bars 824a, 824c may align the first reflector sheet 802a and the reflector base bars 824b, 824d may align the second reflector sheet 802b with the axis 606 of the elongated light source 608), respectively. The reflector base bars 824a, 824c and the reflector base bars 824b, 824d may secure the frame assembly 804 to a lamp base associated with the elongated light source 608, and may define a lower aperture for light to enter the frame assembly from the elongated light source 608. The first reflector base bars 824a, 824c and the reflector base bars 824b, 824d may further affix the frame assembly 804 to a lamp head assembly 502 associated with the elongated light source 608 as described above in FIG.5B, FIG. 6, and FIG. 7.

To extend the model of FIG. 5B, FIG. 6, and FIG. 7, each of the reflector base bars 824a and the second reflector base bar 824b have a plurality of screw holes therein for receiving screws that may secure and affix the reflector assembly 800 to the lamp head assembly 502. The reflector base bars 824a, 824b and the reflector base bars 824b, 824d may be sized, shaped, and oriented to define a lower aperture 826 for light to enter the reflector assembly 700 from the elongated light source of the lamp head assembly 502.

Returning to FIG.8, the frame assembly 804 may further comprise a first top bar 828a aligned with a third top bar 828c, and a second top bar 828b aligned with a fourth top bar 828d configured to receive and support a top portion 830a of the first reflector sheet 802a and a top portion 830b of the second reflector sheet 802b, respectively. The top bars 828a, 828b, 828c, 828d serve to define a mounting surface of the reflector assembly 800 to a work piece assembly 902 as shown in FIG.9, and to define an upper aperture 832 for light to emanate from the modular reflector assembly 800. The frame assembly 804 may further comprises a transparent anti-reflective coated window (not shown) mounted overlying the upper aperture formed by the top bars 828a, 828b, 828c, 828d.

The frame assembly 804 may further comprise a first backing frame 834a-834z having the first curvature and comprising a first plurality of backing ribs 834a-834z and a second backing frame 836a-836z having the second curvature comprising a second plurality of backing ribs 836a-836z removably securable to a back portion 838a of the first reflector sheet 802a and a back portion 838b of the second reflector sheet 802b, respectively. The first plurality of backing ribs 834a-834z and the second plurality of backing ribs 836a-836n may further define the shape of the first reflector sheet 802a and the second reflector sheet 802b, respectively.

The first backing frame 834a-834z having the first curvature and comprising the first plurality of backing ribs 834a-834z may be configured to flex the first reflector sheet 802a to have the first curvature. The second backing frame 836a-238z having the second curvature and comprising the second plurality of backing ribs 836a-836z may be configured to flex the second reflector sheet 802b to have the second curvature. The first backing frame 834a-834z may further flex the first reflector sheet 802a against the first side portion 819a of the central portion 818a of the first end reflector 816a and the second side portion 819b of the central portion 818a of the first end reflector 816a to have the first curvature. The second backing frame 836a-836z may further flex the second reflector sheet 802b against the first side portion 819c of the central portion 818b of the second end reflector 816b and the second side portion 819d of the central portion 818b of the second end reflector 816b to have the second curvature.

FIG. 9 is a perspective view of the lamp assemblies of FIG. 5B, FIG. 6, and FIG. 7 assembled with a hollow cylindrical work piece curing fixture 902 according to an embodiment of the disclosure. Examples of the disclosure provide for a lamp assembly 900 that can be easily configured to an application. For example, a reflector assembly 904 may be formed and mounted into a framework 906 that wraps around the hollow cylindrical work piece curing fixture or tube 902 operable to expose and cure a work piece (not shown) inserted therein that includes 360° of UV exposure with minimal UV light leakage. The framework 906 may also be configured in such a way as to provide a UV light source that can mount in a printer or some other UV curing application.

The modular reflector assemblies 200, 400, 800 of FIGS. 2, 4, and 8, respectively, offer the following advantages. The modular reflector assemblies 200, 400, 800 may be employed to provide a mounting surface for external equipment. The modular reflector assemblies 200, 400, 800 may offer an improvement relating to locating a lamp head module for an area of a work piece to be illuminated. The reflector assemblies 200, 400, 800 may be easily adapted to various reflector styles. The reflector assemblies 200, 400, 800 may provide an improved, more rigid mounting system to attach to the lamp head module than existing systems. Examples of the disclosure also provide a substantially less expensive alternative to a solid machined and polished reflector.

Examples of the disclosure may provide for mounting a reflector assembly to a lamp head module and then aligning the lamp head module such that the reflector within the reflector assembly is positioned correctly. Another feature of the examples of the disclosure is that the reflector within the reflector assembly is applicable over an entire array of LEDs, not individual LED elements as is typical with conventional LED lamps.

Examples of the disclosure include an assembly of parts that maybe used to provide a modular reflector comprising a reflective surface. These parts are designed to be easily manufacturable and low-cost. For example, a less expensive sheet metal reflector may be employed in place of a solid machined and polished reflector, resulting in a substantial cost savings if several different reflector profiles need to be provided. The examples of the disclosure shown in FIGS. 4 and 8 may also have the benefit of a more rigid mounting of the reflector to the lamp head module by mounting the end reflectors to the lamp head module and providing an improved method to define the reflector shape.

It is to be understood that the above description is intended to be illustrative, and not restrictive. Many other examples will be apparent to those of skill in the art upon reading and understanding the above description. The scope of the disclosure should, therefore, be determined with reference to the appended claims.

## Claims

1. A reflector assembly (200), comprising:
a frame assembly (204) comprising a first backing frame (234a - 234n) having a first curvature and a second backing frame (236a - 236n) having a second curvature opposing the first curvature;
a first reflector sheet (202a) of a material removably securable to the first backing frame (234a - 234n), the first backing frame (234a - 234n) flexing the first reflector sheet (202a) to have the first curvature; and
a second reflector sheet (202b) of the material removably securable to the second backing frame (236a - 236n), the second backing frame (236a - 236n) flexing the second reflector sheet (202b) to have the second curvature,
wherein the frame assembly (204) further comprises a first base bar (224a) and a second base bar (224b) receiving and supporting a bottom portion (206a) of the first reflector sheet (202a) and a bottom portion (206b) of the second reflector sheet (202b), respectively.

2. The reflector assembly (200) of claim 1, wherein the first backing frame (234a - 234n) comprises a first plurality of backing ribs (234a - 234n) and the second backing frame (236a - 236n) comprises a second plurality of backing ribs (236a - 236n) removably securable to a back portion (238a) of the first reflector sheet (202a) and a back portion (238b) of the second reflector sheet (202b), respectively.

3. The reflector assembly (200) of either claim 1 or claim 2, wherein the first backing frame comprises a first backing plate (440a) and the second backing frame comprises a second backing plate (440b) removably securable to a back portion (238a) of the first reflector sheet (202a) and a back portion (238b) of the second reflector sheet (202b), respectively.

4. The reflector assembly (200) of claim 3, wherein the frame assembly (204) further comprises a plurality of alignment pins (446a - 446n) insertable along one or more edge portions (448a, 448b) of the first reflector sheet (402a) and one or more edge portions (448c, 448d) of the second reflector sheet (402a), and insertable into the first backing plate (440a) and the second backing plate (440b).

5. The reflector assembly (200) of any one of the preceding claims, wherein the frame assembly (204) further comprises a first end reflector (816a) and a second end reflector (816b) each having a central portion (818a, 818b) extending therefrom and removably receiving side portions (820a, 820b, 820c, 820d) of each of the first reflector sheet 802a) and the second reflector sheet (802b), respectively.

6. The reflector assembly (200) of claim 5,
wherein the central portion (818a) of the first end reflector (816a) has a first side portion (819a) having the first curvature and a second side portion (819b) having the second curvature,
wherein the central portion 818b) of the second end reflector (816b) has a first side portion (819c) having the first curvature and a second side portion (819d) having the second curvature,
wherein the first backing frame (234a - 234n) further flexes the first reflector sheet (202a) against the first side portion (819a) of the central portion (818a) of the first end reflector (816a) and the second side portion (819b) of the central portion (818a) of the first end reflector 816a) to have the first curvature, and
wherein the second backing frame 836a - 836n) further flexes the second reflector sheet (802b) against the first side portion (819c) of the central portion (818b) of the second end reflector (816b) and the second side portion (819d) of the central portion (818b) of the second end reflector (816b) to have the second curvature.

7. The reflector assembly (200) of either claim 5 or claim 6, wherein the first end reflector (816a) and the second end reflector (816b) overly a lamp head assembly.

8. The reflector assembly of any one of the preceding claims 5 to 7, wherein the first end reflector (816a) and the second end reflector (816b) are elongated, extend beyond the bottom portion (206a) of the first reflector sheet (202a) and the bottom portion (206b) of the second reflector sheet (202b), and are mounted to sides of the lamp head assembly.

9. The reflector assembly (200) of any one of the preceding claims, wherein the frame assembly (204) further comprises a first top bar (828a) and a second top bar (8282b) to receiving and supporting a top portion (830a) of the first reflector sheet (802a) and a top portion (830b) of the second reflector sheet (802b), respectively, the first top bar (828a) and the second top bar (828b) defining an upper aperture (832) for light to emanate from the reflector assembly (200).

10. The reflector assembly (200) of claim 9, wherein the frame assembly (204) further comprises a transparent anti-reflective coated window mounted overlying the upper aperture formed by the first top bar (828a) and the second top bar (828b).

11. The reflector assembly (200) of any one of the preceding claims, wherein the first curvature of first backing frame (234a - 234n) and the second curvature of the second backing frame (236a - 236n) are each concave.

12. The reflector assembly (200) of any one of the preceding claims, wherein the combined shape of the first reflector sheet (202a) and the second reflector sheet (202b) is defined by the frame assembly (204) to be wider near a centre portion (810) of the combined shape relative to end portions (812a, 812b) of the combined shape.

13. The reflector assembly (200) of any one of the preceding claims, wherein the first curvature and the second curvature each have a shape of a portion of one of an ellipse having a focal point on the opposite side of the centreline of the projected optical pattern on a work piece, a compound set of ellipses, or a compound set of parabolic shapes.

14. The reflector assembly (200) of any one of the preceding claims, wherein the first reflector sheet (202a) and the second reflector are sheet (202b) are provided in varying lengths corresponding to light sources of varying lengths.

15. The reflector assembly (200) of any one of the preceding claims, wherein the first reflector sheet (202a) and the second reflector sheet (202b) each comprise a sheet of metal.

16. The reflector assembly (200) of claim 15, wherein the metal is an alloy of aluminium.

17. The reflector assembly (200) of either claim 15 or claim 16, wherein the first reflector sheet (202a) and the second reflector sheet (202b) each further comprise a backed liner of reflective material adhered to the sheet of metal.

18. The reflector assembly (200) of any one of the preceding claims 15 to 17,
wherein the first reflector sheet (202a) and the second reflector sheet (202b) each further comprise a reflective coating formed on an inner surface of the first reflector sheet (202a) and on an inner surface of the second reflector sheet (202b) as defined by the frame assembly.

## Patentansprüche

1. Reflektoranordnung (200), umfassend:
eine Rahmenanordnung (204) umfassend einen ersten Stützrahmen (234a - 234n) mit einer ersten Krümmung und einem zweiten Stützrahmen (236a - 236n) mit einer zweiten Krümmung, welche der ersten Krümmung entgegengesetzt ist;
eine erste Reflektorplatte (202a) aus einem Material, das lösbar an dem ersten Stützrahmen (234a - 234n) befestigt werden kann, wobei der erste Stützrahmen (234a - 234n) die erste Reflektorplatte (202a) derart biegt, dass sie die erste Krümmung annimmt; und
eine zweite Reflektorplatte (202b) aus einem Material, welches lösbar an dem zweiten Stützrahmen (236a - 236n) befestigbar ist, wobei der zweite Stützrahmen (236a - 236n) die zweite Reflektorplatte (202b) derart biegt, dass sie die zweite Krümmung annimmt,
wobei die Rahmenanordnung (204) ferner einen ersten Grundbalken (224a) und einen zweiten Grundbalken (224b) umfasst, welche jeweils einen unteren Bereich (206a) der ersten Reflektorplatte (202a) und einen unteren Bereich (206b) der zweiten Reflektorplatte (202b) aufnehmen und stützen.

2. Reflektoranordnung (200) nach Anspruch 1, wobei der erste Stützrahmen (234a - 234n) eine erste Mehrzahl von Stützrippen (234a - 234n) und der zweite Stützrahmen (236a - 236n) eine zweite Mehrzahl von Stützrippen (236a - 236n) umfassen, die jeweils lösbar an einem Rückenbereich (238a) der ersten Reflektorplatte (202a) und einem Rückenbereich (238b) der zweiten Reflektorplatte (202b) befestigbar sind.

3. Reflektoranordnung (200) nach Anspruch 1 oder 2, wobei der erste Stützrahmen eine erste Stützplatte (440a) umfasst und der zweite Stützrahmen eine zweite Stützplatte (440b) umfasst, die jeweils lösbar an einem Rückenbereich (238a) der ersten Reflektorplatte (202a) und einem Rückenbereich (238b) der zweiten Reflektorplatte (202b) befestigbar sind.

4. Reflektoranordnung (200) nach Anspruch 3, wobei die Rahmenanordnung (204) ferner eine Mehrzahl von Ausrichtungsstiften (446a - 446n) umfasst, die entlang einem oder mehreren Kantenbereichen (448a, 448b) der ersten Reflektorplatte (402a) und einem oder mehreren Kantenbereichen (448c, 448d) der zweiten Reflektorplatte (402a) einsteckbar sind und in die erste Stützplatte (440a) und die zweite Stützplatte (440b) einsteckbar sind.

5. Reflektoranordnung (200) nach einem der vorhergehenden Ansprüche, wobei die Rahmenanordnung (204) ferner einen ersten Endreflektor (816a) und einen zweiten Endreflektor (816b) umfasst, die jeweils einen Mittelbereich (818a, 818b) haben, der sich daran anschließt, und jeweils lösbar Seitenteile (820a, 820b, 820c, 820d) sowohl der ersten Reflektorplatte (802a) als auch der zweiten Reflektorplatte (802b) aufnimmt.

6. Reflektoranordnung (200) nach Anspruch 5,
wobei der Mittelbereich (818a) des ersten Endreflektors (816a) einen ersten Seitenbereich (819a) mit der ersten Krümmung und einen zweiten Seitenbereich (819b) mit der zweiten Krümmung hat,
wobei der Mittelbereich (818b) des zweiten Endreflektors (816b) einen ersten Seitenbereich (819c) mit der ersten Krümmung und einen zweiten Seitenbereich (819d) mit der zweiten Krümmung hat,
wobei der erste Stützrahmen (234a - 234n) ferner die erste Reflektorplatte (202a) gegen den ersten Seitenbereich (819a) des Mittelbereichs (818a) des ersten Endreflektors (816a) und den zweiten Seitenbereich (819b) des Mittelbereichs (818a) des ersten Endreflektors (816a) biegt, sodass sie die erste Krümmung annimmt, und
wobei der zweite Stützrahmen (836a - 836n) ferner die zweite Reflektorplatte (802b) gegen den ersten Seitenbereich (819c) des Mittelbereichs (818b) des zweiten Endreflektors (816b) und den zweiten Seitenbereich (819d) des Mittelbereichs (818b) des zweiten Endreflektors (816b) biegt, sodass sie die zweite Krümmung annimmt.

7. Reflektoranordnung (200) nach entweder Anspruch 5 oder Anspruch 6, wobei der erste Endreflektor (816a) und der zweite Endreflektor (816b) eine Lampenkopfanordnung überlagern.

8. Reflektoranordnung nach einem der vorhergehenden Ansprüche 5 bis 7, wobei der erste Endreflektor (816a) und der zweite Endreflektor (816b) länglich sind, sich über den unteren Bereich (206a) der ersten Reflektorplatte (202a) und den unteren Bereich (206b) der zweiten Reflektorplatte (202b) hinaus erstrecken und an Seiten der Lampenkopfanordnung montiert sind.

9. Reflektoranordnung (200) nach einem der vorhergehenden Ansprüche, wobei die Rahmenanordnung (204) ferner einen ersten oberen Balken (828a) und einen zweiten oberen Balken (828b) jeweils zum Aufnehmen und Stützen eines oberen Bereichs (830a) der ersten Reflektorplatte (802a) und eines oberen Bereichs (830b) der zweiten Reflektorplatte (802b) umfasst, wobei der erste obere Balken (828a) und der zweite obere Balken (828b) eine obere Öffnung (832) definieren, durch welche Licht aus der Reflektoranordnung (200) treten kann.

10. Reflektoranordnung (200) nach Anspruch 9, wobei die Rahmenanordnung (204) ferner ein transparentes, Antireflexionsbeschichtetes Fenster umfasst, welches so montiert ist, dass es die obere, durch den ersten oberen Balken (228a) und den zweiten oberen Balken (228b) gebildete Öffnung überdeckt.

11. Reflektoranordnung (200) nach einem der vorhergehenden Ansprüche, wobei die erste Krümmung des ersten Stützrahmens (234a - 234n) und die zweite Krümmung des zweiten Stützrahmens (236a - 236n) jeweils konkav sind.

12. Reflektoranordnung (200) nach einem der vorhergehenden Ansprüche, wobei die kombinierte Form der ersten Reflektorplatte (202a) und der zweiten Reflektorplatte (202b) durch die Rahmenanordnung (204) so definiert ist, dass sie in einem mittleren Bereich (810) der kombinierten Form im Vergleich zu den Endbereichen (812a, 812b) der kombinierten Form breiter ist.

13. Reflektoranordnung (200) nach einem der vorhergehenden Ansprüche, wobei die erste Krümmung und die zweite Krümmung jeweils eine Form eines Bereichs entweder einer Ellipse mit einem Brennpunkt auf der gegenüberliegenden Seite der Mittellinie des projizierten optischen Musters auf einem Werkstück, einer zusammengesetzten Menge von Ellipsen oder einer zusammengesetzten Menge von Parabelformen hat.

14. Reflektoranordnung (200) nach einem der vorhergehenden Ansprüche, wobei die erste Reflektorplatte (202a) und die zweite Reflektorplatte (202b) in unterschiedlichen Längen bereitgestellt werden, welche Lichtquellen von unterschiedlichen Längen entsprechen.

15. Reflektoranordnung (200) nach einem der vorhergehenden Ansprüche, wobei die erste Reflektorplatte (202a) und die zweite Reflektorplatte (202b) jeweils ein Blech aus Metall umfassen.

16. Reflektoranordnung (200) nach Anspruch 15, wobei das Metall eine Legierung aus Aluminium ist.

17. Reflektoranordnung (200) nach entweder Anspruch 15 oder Anspruch 16, wobei die erste Reflektorplatte (202a) und die zweite Reflektorplatte (202b) ferner einen gestützten Überzug aus reflektierendem Material umfassen, welcher an dem Blech haftet.

18. Reflektoranordnung (200) nach einem der vorhergehenden Ansprüche 15 bis 17, wobei die erste Reflektorplatte (202a) und die zweite Reflektorplatte (202b) jeweils eine reflektierende Beschichtung umfassen, die auf einer inneren Oberfläche der ersten Reflektorplatte (202a) und auf einer inneren Oberfläche der zweiten Reflektorplatte (202b) aufgebracht sind, wie diese durch die Rahmenanordnung definiert sind.

## Revendications

1. Ensemble réflecteur (200) comprenant :
un ensemble de bâti (204) comprenant un premier bâti de renforcement (234a-234n) ayant une première courbure et un second bâti de renforcement (236a-236n) ayant une seconde courbure opposée à la première courbure ;
une première feuille de réflecteur (202a) réalisée avec un matériau pouvant être fixé de manière amovible sur le premier bâti de renforcement (234a-234n), le premier bâti de renforcement (234a-234n) fléchissant la première feuille de réflecteur (202a) pour avoir la première courbure ; et
une seconde feuille de réflecteur (202b) réalisée avec un matériau pouvant être fixé de manière amovible sur le second bâti de renforcement (236a-236n), le second bâti de renforcement (236a-236n) fléchissant la seconde feuille de réflecteur (202b) pour avoir la seconde courbure,
dans lequel l'ensemble de bâti (204) comprend en outre une première barre de base (224a) et une seconde barre de base (224b) recevant et supportant une partie inférieure (206a) de la première feuille de réflecteur (202a) et une partie inférieure (206b) de la seconde feuille de réflecteur (202b) respectivement.

2. Ensemble réflecteur (200) selon la revendication 1, dans lequel le premier bâti de renforcement (234a-234n) comprend une première pluralité de nervures de renforcement (234a-234n) et le second bâti de renforcement (236a-236n) comprend une seconde pluralité de nervures de renforcement (236a-236n) pouvant être fixées de manière amovible à une partie arrière (238a) de la première feuille de réflecteur (202a) et une partie arrière (238b) de la seconde feuille de réflecteur (202b) respectivement.

3. Ensemble réflecteur (200) selon la revendication 1 ou la revendication 2, dans lequel le premier bâti de renforcement comprend une première plaque de renforcement (440a) et le second bâti de renforcement comprend une seconde plaque de renforcement (440b) pouvant être fixée de façon amovible à une partie arrière (238a) de la première feuille de réflecteur (202a) et une partie arrière (238b) de la seconde feuille de réflecteur (202b), respectivement.

4. Ensemble réflecteur (200) selon la revendication 3, dans lequel l'ensemble de bâti (204) comprend en outre une pluralité de broches d'alignement (446a-446n) pouvant être insérées le long d'une ou de plusieurs parties de bord (448a, 448b) de la première feuille de réflecteur (402a) et une ou plusieurs parties de bord (448c, 448d) de la seconde feuille de réflecteur (402a), et pouvant être insérées dans la première plaque de renforcement (440a) et la seconde plaque de renforcement (440b).

5. Ensemble réflecteur (200) selon l'une quelconque des revendications précédentes, dans lequel l'ensemble de bâti (204) comprend en outre un premier réflecteur d'extrémité (816a) et un second réflecteur d'extrémité (816b) ayant chacun une partie centrale (818a, 818b) s'étendant à partir de ce dernier et recevant de manière amovible des parties latérales (820a, 820b, 820c, 820d) de chacune parmi la première feuille de réflecteur (802a) et la seconde feuille de réflecteur (802b), respectivement.

6. Ensemble réflecteur (200) selon la revendication 5,
dans lequel la partie centrale (818a) du premier réflecteur d'extrémité (816a) a une première partie latérale (819a) ayant la première courbure et une seconde partie latérale (819b) ayant la seconde courbure,
dans lequel la partie centrale (818b) du second réflecteur d'extrémité (816b) a une première partie latérale (819c) ayant la première courbure et une seconde partie latérale (819d) ayant la seconde courbure,
dans lequel le premier bâti de renforcement (234a-234n) fléchit en outre la première feuille de réflecteur (202a) contre la première partie latérale (819a) de la partie centrale (818a) du premier réflecteur d'extrémité (816a) et la seconde partie latérale (819b) de la partie centrale (818a) du premier réflecteur d'extrémité (816a) pour avoir la première courbure, et
dans lequel le second bâti de renforcement (836a-836n) fléchit en outre la seconde feuille de réflecteur (802b) contre la première partie latérale (819c) de la partie centrale (818b) du second réflecteur d'extrémité (816b) et la seconde partie latérale (819d) de la partie centrale (818b) du second réflecteur d'extrémité (816b) pour avoir la seconde courbure.

7. Ensemble réflecteur (200) selon la revendication 5 ou la revendication 6, dans lequel le premier réflecteur d'extrémité (816a) et le second réflecteur d'extrémité (816b) recouvrent un ensemble de tête de lampe.

8. Ensemble réflecteur selon l'une quelconque des revendications 5 à 7, dans lequel le premier réflecteur d'extrémité (816a) et le second réflecteur d'extrémité (816b) sont allongés, s'étendent au-delà de la partie inférieure (206a) de la première feuille de réflecteur (202a) et la partie inférieure (206b) de la seconde feuille de réflecteur (202b), et sont montés sur les côtés de l'ensemble de phare.

9. Ensemble réflecteur (200) selon l'une quelconque des revendications précédentes, dans lequel l'ensemble de bâti (204) comprend en outre une première barre supérieure (828a) et une seconde barre supérieure (8282b) pour recevoir et supporter une partie supérieure (830a) de la première feuille de réflecteur (802a) et une partie supérieure (830b) de la seconde feuille de réflecteur (802b) respectivement, la première barre supérieure (828a) et la seconde barre supérieure (828b) définissant une ouverture supérieure (832) pour que la lumière sorte de l'ensemble réflecteur (200).

10. Ensemble réflecteur (200) selon la revendication 9, dans lequel l'ensemble de bâti (204) comprend en outre une fenêtre à revêtement anti-réfléchissant transparent montée en superposition sur l'ouverture supérieure formée par la première barre supérieure (828a) et la seconde barre supérieure (828b).

11. Ensemble réflecteur (200) selon l'une quelconque des revendications précédentes, dans lequel la première courbure du premier bâti de renforcement (234a-234n) et la seconde courbure du second bâti de renforcement (236a-236n) sont chacune concaves.

12. Ensemble réflecteur (200) selon l'une quelconque des revendications précédentes, dans lequel la forme combinée de la première feuille de réflecteur (202a) et de la seconde feuille de réflecteur (202b) est définie par l'ensemble de bâti (204) pour être plus large à proximité d'une partie centrale (810) de la forme combinée par rapport aux parties d'extrémité (812a, 812b) de la forme combinée.

13. Ensemble réflecteur (200) selon l'une quelconque des revendications précédentes, dans lequel la première courbure et la seconde courbure ont chacune une forme d'une partie de l'un parmi une ellipse ayant un point focal sur le côté opposé de l'axe central du motif optique projeté sur une pièce, un ensemble composé d'ellipses ou un ensemble composé de formes paraboliques.

14. Ensemble réflecteur (200) selon l'une quelconque des revendications précédentes, dans lequel la première feuille de réflecteur (202a) et la seconde feuille de réflecteur sont prévues en différentes longueurs correspondant aux sources lumineuses de longueurs variables.

15. Ensemble réflecteur (200) selon l'une quelconque des revendications précédentes, dans lequel la première feuille de réflecteur (202a) et la seconde feuille de réflecteur (202b) comprennent chacune une feuille de métal.

16. Ensemble réflecteur (200) selon la revendication 15, dans lequel le métal est un alliage d'aluminium.

17. Ensemble réflecteur (200) selon la revendication 15 ou la revendication 16, dans lequel la première feuille de réflecteur (202a) et la seconde feuille de réflecteur (202b) comprennent chacune un revêtement renforcé avec un matériau réfléchissant collé sur la feuille de métal.

18. Ensemble réflecteur (200) selon l'une quelconque des revendications précédentes 15 à 17, dans lequel la première feuille de réflecteur (202a) et la seconde feuille de réflecteur (202b) comprennent chacune en outre un revêtement réfléchissant formé sur une surface interne de la première feuille de réflecteur (202a) et sur une surface interne de la seconde feuille de réflecteur (202b), comme défini par l'ensemble de bâti.
